## Europäisches Patentamt
## European Patent Office
## Office européen des brevets

(19)

(11) Veröffentlichungsnummer: **0 191 951**
**B1**

(12) **EUROPÄISCHE PATENTSCHRIFT**

(45) Veröffentlichungstag der Patentschrift:
08.03.89

(51) Int. Cl.⁴: **B 23 H 7/26**, B 23 H 1/02

(21) Anmeldenummer: 85116644.7

(22) Anmeldetag: 30.12.85

(54) **Verfahren und Vorrichtung zur Ermittlung der elektroerosiven Fertigstellung eines Startloches.**

(30) Priorität: 31.12.84 DE 3447870

(43) Veröffentlichungstag der Anmeldung:
27.08.86 Patentblatt 86/35

(45) Bekanntmachung des Hinweises auf die Patenterteilung:
08.03.89 Patentblatt 89/10

(84) Benannte Vertragsstaaten:
**CH DE FR GB LI**

(56) Entgegenhaltungen:
**DE-C-2 716 343**
**US-A-4 039 779**

(73) Patentinhaber: **AG für industrielle Elektronik AGIE Losone bei Locarno, CH- 6616 Losone/Locarno (CH)**

(72) Erfinder: **Sciaroni, Boris, Via Vallemaggia 65b, CH-6604 Locarno (CH)**

(74) Vertreter: **EGLI- EUROPEAN PATENT ATTORNEYS, Widenmayerstrasse 5, D-8000 München 22 (DE)**

EP 0 191 951 B1

**Beschreibung**

Die Erfindung bezieht sich auf ein Verfahren und eine Vorrichtung zur Ermittlung der Fertigstellung eines durch ein Werkstück geführten Startlochs, das mit Hilfe einer Startelektrode funkenerosiv auf einer Elektroerosionsmaschine hergestellt wird, insbesondere auf ein Verfahren gemäss dem Gattungsbegriff des Patentanspruchs 1 und eine Vorrichtung gemäss dem Gattungsbegriff des Patentanspruchs 5.

Es ist bekannt, vor der eigentlichen funkenerosiven Bearbeitung eines Werkstückes ein Startloch durch dasselbe ebenfalls funkenerosiv herzustellen. Hierzu verwendet man eine Elektroerosionsmaschine mit einer Startelektrode ausreichender Eigensteifigkeit. Die Startelektrode und das Werkstück sind mit dem Ausgang einer elektrischen Versorgungseinrichtung, häufig einem Impulsgenerator, verbunden. Der Stromkreis wird hierbei über die sogenannte Arbeitszone, d. h. den Zwischenraum zwischen der Startelektrodenspitze und dem Werkstück geschlossen. Zur Herstellung des Startlochs wird die Startelektrode in der Regel von einer motorisch angetriebenen Spindel in vertikaler Richtung durch das Werkstück bzw. das Bohrloch geschoben. Hierbei wird häufig der Arbeitsspalt bzw. das Bohrloch dadurch gespült, dass von aussen unter Druck stehende Flüssigkeit durch die innen hohl ausgebildete Startelektrode gepumpt wird. Da die funkenerosive Herstellung von Startlöchern an sich bekannt ist, kann statt weiterer Erläuterungen auf die diesbezüglich einschlägige Literatur verwiesen werden.

Bei den heute bekannten Systemen zur Herstellung von Startlöchern auf Elektroerosionsanlagen, im folgenden EDM-Anlagen abgekürzt, wirft die Ermittlung der tatsächlichen Fertigstellung des Startlochs Probleme auf. Bei der Herstellung eines einzigen Startlochs überlies man die laufende Kontrolle des Bohrlochs meistens dem Operator. Sobald dieser das tatsächliche Ende der Bohrung, also die Fertigstellung des Startlochs feststellte stoppte er die Anlage. Bei der numerisch gesteuerten Herstellung von Startlöchern wurde der der Startelektrode insgesamt erteilte Vorschub als Bewertungsgrösse zur Ermittlung der Fertigstellung des Startlochs herangezogen. Hierbei ging man im wesentlichen von der Überlegung aus, dass das Startloch jedenfalls dann fertiggestellt sei, wenn der Startelektrode ein im wesentlichen der Dicke des Werkstucks entsprechender Gesamtvorschub aufgeprägt worden ist, ggf. unter Berücksichtigung des Startelektrodenverschleisses während des Bohrvorganges. Hierbei tritt das Prcblem auf, dass der Elektrodenverschleiss nicht konstant ist, sondern zwischen 50 % und 200 % variieren kann. Auch hängt der Verschleiss von der jeweiligen Temparatur, dem Verschmutzungszustand im Bohrloch, dem Druck der Spülflüssigkeit, den für die Elektrode und das Werkstück verwendeten Materialien sowie von weiteren Faktoren ab. Das in der Regel nicht vorhersagbare Ausmass des Verschleisses wirkt sich besonders dann gravierend aus, wenn mit derselben Startelektrode mehrere Startlöcher herzustellen sind. Denn wegen des unbekannten Ausmasses des Verschleisses ist auch die laufende Änderung der Startelektrodenlänge unbekannt.

Bei mehreren nacheinander ausgeführten Startbohrungen kann dies dann dazu führen, dass man anstelle eines durchgehenden Startloches lediglich ein Sackloch erhält. Ein Sackloch könnte man zwar grundsätzlich dadurch vermeiden, dass man von vorne herein einen fiktiven Elektrodenverschleiss in die numerische Steuerung der Bohrbewegung einprogrammiert, der weit über dem durchschnittlichen Verschleiss liegt. Diese Massnahme hat aber den Nachteil, dass die Elektrode selbst dann noch von ihrer Vorschubeinrichtung angetrieben wird, wenn sie längst das Werkstück vollständig durchquert hat und bereits gegen ein anderes Werkstück oder ein Maschinenteil, z. B. die Aufspannbasis, anstösst. Letzteres kann dann zur Zerstörung der Startelektrode führen.

Aus den vorgenannten Gründen ist ein sinnvolles Vorprogrammieren der Startelektrodenbewegung unter wirtschaftlichen Gesichtspunkten schwer durchführbar, wenn nicht gar unmöglich.

Ausgehend von diesem technischen Hintergrund, insbesondere vom Stand der Technik gemäss DE-C2-2 716 343, welcher ein gattungsgemässes Verfahren und eine gattungsgemässe Vorrichtung beschreibt, bezweckt die Erfindung die Bereitstellung eines Verfahrens und einer Vorrichtung zur einfachen und universellen Feststellung der tatsächlichen Fertigstellung eines mittels einer Startelektrode funkenerosiv in einem Werkstück hergestellten Startlochs.

In verfahrensmässiger Hinsicht wird diese Aufgabe dadurch gelöst, dass bei dem eingangs genannten gattungsgemässen Verfahren eine aufgrund des Wiederaustrittes der Spitze der Startelektrode aus dem Werkstück sich ergebende sprunghafte Änderung eines Verfahrensparameters selbsttätig erfasst, insbesondere gemäss dem kennzeichnenden Teil des Patentanspruchs 1 verfahren wird.

In vorrichtungsmässiger Hinsicht wird diese Aufgabe dadurch gelöst, dass bei der eingangs genannten gattungsgemässen Vorrichtung ein Fühler zur Erfassung der sprunghaften Änderung eines Verfahrensparameters aufgrund des Wiederaustrittes der Spitze der Startelektrode aus dem Werkstück ausgelegt und angeordnet ist. Insbesondere ist die gattungsgemässe Vorrichtung gemäss dem Kennzeichen des Patentanspruchs 5 ausgestaltet.

Das erfindungsmässige Lösungsprinzip hat den Vorteil, dass die Vollendung bzw. die Fertigstellung des Startloches stets sicher und unabhängig vom Elektrodenverschleiss, von der Tiefe der Bohrung, vom Material der Startelektrode, vom Material des Werkstücks, von der Stabilität des Arbeitsprozesses, von den Verschmutzungsverhältnissen im Arbeitsspalt und dergleichen feststellbar ist.

Gemäss einem bevorzugten Ausführungsbeispiel wird das Startloch während des Bohrens mit einer Flüssigkeit druckgespült und das sprunghafte Abfallen des Spüldruckes beim Wiederaustritt der Startelektrodenspitze aus dem Werkstück mit Hilfe eines entsprechenden Fühlers ermittelt. Nach einem weiteren bevorzugten Ausführungsbeispiel wird, ggf. zusätzlich, der sprunghafte Abfall der von der elektrischen Versorgungseinrichtung, z. B. einem Impulsgenerator, an die Arbeitszone abgegebenen Leistung mittels eines entsprechenden Fühlers ermittelt. Ist bei einem weiteren bevorzugten Ausführungsbeispiel - gesehen in Bohrrichtung - hinter dem Werkstück ein Anschlag vorgesehen, dann wird das Auftreffen der Startelektrodenspitze auf den Anschlag ermittelt. Ist hierbei für die Startelektrode eine selbsttätig arbeitende Antriebseinrichtung vorgesehen, dann wird in Weiterbildung des vorstehenden Erfindungsgedankens vorzugsweise der Stillstand der Startelektrode oder eines Teiles von deren Antriebseinrichtung mittels eines entsprechenden Fühlers festgestellt. Nach einem weiteren bevorzugten Ausführungsbeispiel weist die Antriebseinrichtung für den Startelektrodenvorschub einen elektrischen Antriebsmotor auf. In diesem Fall wird vorzugsweise und ggf. zusätzlich der sprunghafte Anstieg der elektrischen Leistungsaufnahme des Antriebsmotors beim Auftreffen der Startelektrodenspitze auf den Anschlag mittels eines entsprechenden Fühlers, beispielsweise eines Wattmeters ermittelt. Nach einem weiteren bevorzugten Ausführungsbeispiel weist der Anschlag einen blanken elektrischen Leiter auf seiner dem vorgesehenen Startlochaustritt gegenüberliegenden Seite auf und steht auf einem anderen Potential als die Startelektrode. In diesem Fall wird vorzugsweise der Beginn des Stromflusses im Leiter aufgrund des Kontaktes mit der Startelektrode ermittelt.

Zur Ermittlung der sprunghaften Änderung des Wertes eines Verfahrensparameters beim Durchbruch der Startelektrodenspitze aus dem Werkstück weisen die Fühler vorzugsweise jeweils eine Diskriminatorstufe bzw. eine Schwellwertstufe auf.

Nachstehend wird die Erfindung anhand von Ausführungsbeispielen unter Bezugnahme auf die beigefügte stark schematische Zeichnung noch näher erläutert.

In der Zeichnung zeigen:

Fig. 1 ein erstes Ausführungsbeispiel der Erfindung zur Ermittlung des Abfalls der von der Versorungseinrichtung abgegebenen Leistung und/oder des Anstiegs der von der Startelektrodenvorschubeinrichtung aufgenommenen Leistung nach dem Wiederaustritt der Startelektrodenspitze aus dem Werkstück bzw. dem Auftreffen der Startelektrodenspitze auf einen Anschlag;

Fig. 2 ein zweites Ausführungsbeispiel der Erfindung zur Ermittlung der Bewegungsänderung der Startelektrode bzw. von Teilen von deren Antriebseinrichtung beim Auftreffen der Startelektrodenspitze auf einen Anschlag;

Fig. 3 ein weiteres Ausführungsbeispiel der Erfindung zur Erfassung des Durchtrittes der Elektrodenspitze durch das Werkstück mittels eines Schalters;

Fig. 4 ein weiteres Ausführungsbeispiel der Erfindung mit einer oberflächenbehandelten Startelektrode; und

Fig. 5 ein weiteres Ausführungsbeispiel der Erfindung zur Ermittlung des Spüldruckabfalles beim Durchbruch der Elektrodenspitze aus dem Werkstück.

Sämtliche Figuren zeigen Längsschnitte durch die Arbeitszone des jeweiligen Ausführungsbeispiels. Auch werden in ihnen stets gleiche Bezugszeichen für funktionell gleiche Teile verwendet.

Gemäss den Figuren weist jede Arbeitszone eine Startelektrode 1 und ein Werkstück 2 auf. Die Startelektrode 1 und das Werkstück 2 sind in bekannter Weise in einer EDM-Anlage angeordnet. Mit der Startelektrode 1 wird ein Bohrloch 20, die spätere Startbohrung, im Werkstück 2 funkenerosiv hergestellt. Hierzu weist die Startelektrode 1 eine ausreichende Eigensteifigkeit auf. Sie wird von einem Antrieb in Richtung des Werkstückes 2 und durch dieses hindurch vorgeschoben. Der Antrieb besteht im wesentlichen aus einem Elektromotor 5, einer vom Elektromotor 5 angetriebenen Spindel 4 und einer mit der Spindel 4 in Eingriff stehenden Hubmutter 18. Die Startelektrode 1 und das Werkstück 2 sind in bekannter Weise mit einer elektrischen Versorgungseinrichtung verbunden, welche die zur funkenerosiven Arbeit benötigte elektrische Energie liefert.

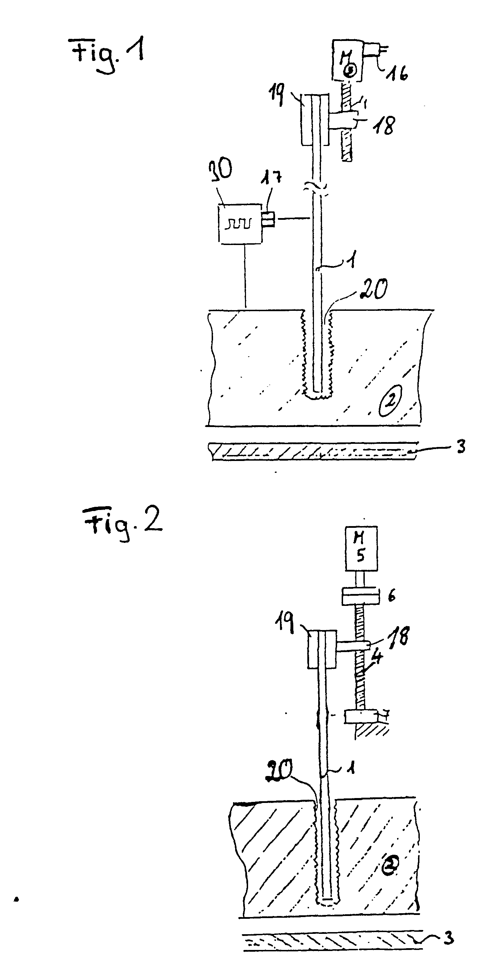

Bei den in den Figuren 1, 2 und 5 dargestellten Ausführungsbeispielen ist die Hubmutter 18 fest mit einem Mitnehmer 19 verbunden, in welchen seinerseits die Startelektrode 1 eingespannt ist.

Die in den Figuren 1 bis 4 dargestellten Ausführungsbeispiele weisen - gesehen in Vorschubrichtung der Startelektrode 1 - unterhalb des zu erwartenden Startelektrodenaustritttes einen Anschlag 3 auf. Der Anschlag 3 besteht aus einer ortsfest angeordneten isolierten Platte, beispielsweise aus synthetischem Material.

Bei diesen Ausführungsbeispielen wird die Startelektrode 1 von ihrem Vorschubsystem nach Vollendung des Bohrloches 20, d. h. nach Vollendung des Startlochs, solange weiterbewegt, bis die Startelektrodenspitze gegen den dicht unterhalb des Werkstückes (2) angeordneten Anschlag 3 stösst. Hierdurch wird der weiteren Vorschubbewegung der Startelektrode 1 plötzlich ein mechanischer Widerstand entgegen gesetzt.

Bei dem in Figur 1 dargetellten Ausführungsbeispiel wird diese sprunghafte Widerstandserhöhung dadurch gemessen, dass mittels eines Wattmeters 16 die vom Elektromotor 5 ausgenommene Leistung gemessen wird. Die plötzliche Erhöhung des der Vorschubbewegung entgegengerichteten mechanischen Widerstandes zeigt sich an einer sprunghaften Leistungsaufnahme des Elektromotors 5. Der sprunghafte Anstieg der Leistungsaufnahme des Elektromotors 5 zeigt demnach beim dargestellten Ausführungsbeispiel die tatsächliche Fertigstellung des Startloches an. Das aus dem sprunghaften Leistungsanstieg gewonnene Signal wird im übrigen dazu verwendet, die Spindel 4 in entgegengesetzter Richtung anzutreiben und damit die Startelektrode 1 aus dem Bohrloch 20 herauszuziehen.

Beim dargestellten Ausführungsbeispiel sind die Startelektrode 1 und das Werkstück 2 in bekannter Weise mit dem Ausgang einer elektrischen Versorgungseinheit, hier einem Impulsgenerator 30, verbunden. In den aus dem Impulsgenerator 30, der Startelektrode 1, der Arbeitszone und dem Werkstück 2 aufgebauten Stromkreis ist ein Wattmeter 17 geschaltet, welches die vom Impulsgenerator 30 an die Arbeitszone abgegebene elektrische Leistung misst. Sobald das Bohrloch 20 freigebohrt ist, d. h. die Startelektrode 1 das Werkstück 2 durchstossen hat, findet praktisch keine Erosion mehr statt. Dies bedeutet, dass die in der Arbeitszone pro Zeiteinheit verbrauchte elektrische Energie, oder mit anderen Worten die vom Impulsgenerator 30 abgegebene Leistung, sprunghaft abfällt. Das Wattmeter 17 misst nun über eine Diskriminatorstufe den sprunghaften Leistungsabfall und damit die Fertigstellung des Startlochs. Auch dieses Signal kann dazu benutzt werden, den weiteren Startelektrodenvorschub zu unterbinden und die Startelektrode 1 aus dem Bohrloch 20 wieder herauszuziehen. Soll nur der sprunghafte Abfall der vom Impulsgenerator 30 abgegebenen Leistung mittels des Wattmeters 17 gemessen werden, bedarf es des Anschlages 3 grundsätzlich nicht.

Werden beide Messverfahren bzw. Messvorrichtungen eingesetzt, dann kann die Messung der sprunghaften Leistungsaufnahme des Elektromotors 5 mit Hilfe des Wattmeters 17 sozusagen als Sicherheitsmassnahme angesehen werden, die lediglich für den Fall benötigt wird, dass das Wattmeter 17 nicht ansprechen sollte, z. B. wegen eines Defektes.

Bei dem in Figur 2 dargestellten Ausführungsbeispiel ist die Abtriebswelle des Elektromotors 5 über eine Rutschkupplung 6 mit der Spindel 4 verbunden. Ferner ist ein Geschwindigkeitsmesser 7 derart mit der Spindel 4 verbunden, dass er den Stillstand der Rotationsbewegung der Spindel detektiert.

Sobald die Startelektrode 1 nach Durchtritt durch das Werkstück 2 gegen den Anschlag 3 stösst, bleiben sie und die Spindel 4 infolge der Zwischenschaltung der Rutschkupplung 6 stehen. Der Stillstand der Spindel 4 wird vom Geschwindigkeitsmesser 7 detektiert. Aus dem Stillstandssignal wird ein Signal zum Herausziehen der Startelektrode 1 aus dem Bohrloch 20 gegeben.

Statt oder zusätzlich zur Feststellung des Spindelstillstandes kann der Genchwindigkeitsmesser auch den Stillstand der Startelektrode 1 detektieren.

Die Rutschkupplung 6 hat im übrigen den Vorteil, dass die maximal auf die Startelektrode 1 wirkende Vorschubkraft kontrolliert vorgebbar ist. Vorzugsweise begrenzt die Rutschkupplung 6 die maximal übertragbare Vorschubkraft so, dass sich die Startelektrode 1 beim Auftreffen auf den Anschlag 3 nicht so stark durchbiegt, dass sie die Innenwandung des Bohrlochs 20 kontaktiert.

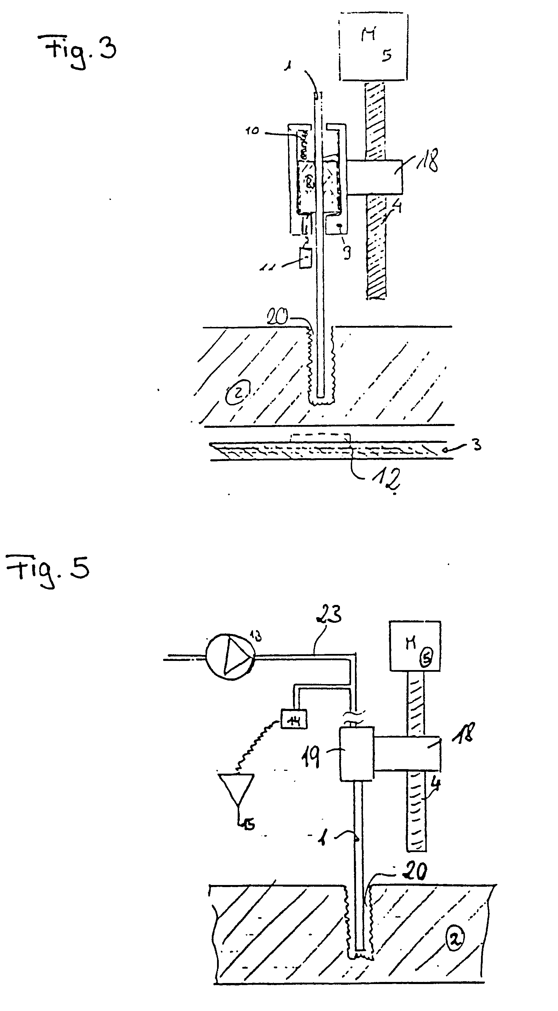

Bei dem in Figur 3 dargestellten Ausführungsbeispiel ist die Hubmutter 18 zunächst mit einem Führungsgehäuse 9 fest verbunden. Im Führungsgehäuse 9 ist ein Mitnehmerschlitten 8 vertikal verschiebbar angeordnet. Er ist seinerseits fest mit der Startelektrode 1 verbunden. Der Mitnehmerschlitten 8 kann sich wie ein Kolben in einem Zylinder im Führungsgehäuses 9 vertikal auf und ab bewegen. Eine Schraubenfeder 10 hält ihn gewöhnlich in seiner untersten Lage. Die beiden Widerlager für die Schraubenfeder 10 sind eine oberhalb des Mitnehmerschlittens 8 liegende Anlagefläche im Führungsgehäuse 9 und die Kopffläche des Mitnehmerschlittens 8. In der Bodenfläche des Führungsgehäuses 9 ist ein elektrischer EIN/AUS-Schalter 11 angeordnet. Dieser ragt in Form eines unter Federvorspannung stehenden Stiftes aus der Bodenfläche des Führungsgehäuses 9 nach oben in Richtung des Mitnehmerschlittens 8. Durch die Kraft der Schraubenfeder 10 wird der Mitnehmerschlitten so stark gegen den Schalterstift gedrückt, dass er gewöhnlich stets in einem seiner beiden möglichen Zustände gehalten wird. Sobald die Startelektrodenspitze nach Durchtritt aus dem Werkstück 2 gegen den Anschlag 3 stösst, bleibt die Startelektrode 1 und damit der Mitnehmerschlitten 8 stehen. Der Spindelantrieb bewegt jedoch das Führungsgehäuse 9 weiter vertikal nach unten. Diese Bewegung hält solange an, bis der Schalterstift des Schalters 11 soweit freigegeben ist, dass der Schalter 11 in seinen anderen Schaltzustand gelangt. Hierdurch wird wiederum ein Signal für den Rückzug der Startelektrode 1 aus dem fertigen Startloch gegeben.

Der Zweipunktschalter kann auch in Form des gestrichelt dargestellten EIN/AUS-Schalters 12 direkt auf dem Anschlag 3 angeordnet sein. In diesem Fall genügt es, die Startelektrode 1 lediglich über den in Figur 1 gezeigten Mitnehmer 19 mit der Hubmutter 18 zu verhinden.

Selbstverständlich können derartige Zweipunktschalter auch an anderen geeigneten Orten angeordnet sein.

Bei dem in Figur 5 dargestellten Ausführungsbeispiel ist die Startelektrode 1 innen hohl, was grundsätzlich auch für die übrigen Ausführungsbeispiele gelten kann.

Während des Erodierens pumpt eine Flüssigkeitsdruckpumpe 13 über eine Druckleitung 23 unter Druck stehendes Spülmedium durch die Startelektrode 1. Hierdurch wird das gesamte Bohrloch 20 dauernd gespült. Die während des Erodierens tatsächlich durch die Startelektrode 1 fliessende Spülwassermenge hängt sehr stark vom Flüssigkeitswiderstand im Bohrloch 20 ab. Grundsätzlich nimmt der hydraulische Widerstand mit der Bohrtiefe zu. Ist jedoch die Bohrung zu Ende, durchstösst also die Startelektrode 1 das Werkstück 2 dann fällt der hydraulische Druck sprungartig ab. Der Druckverlauf wird durch einen Flüssigkeitsdruckfühler 14 mit nachgeschaltetem Signalverstärker 15 ermittelt. Der plötzliche Druckabfall gibt ein deutliches Signal für die Fertigstellung des Startlochs. Aus diesem Signal ist dann widerum ein Signal für den Rückzug der Startelektrode 1 aus dem Startloch ableitbar.

Aus Vorstehendem ergibt sich, dass es bei der zweiten Variante des Ausführungsbeispiels gemäss Figur 1 (Messung des Abfalls der Impulsgeneratorleistung) und beim Ausführungsbeispiel gemäss Figur 5 grundsätzlich keines Anschlags 3 bedarf. Bei diesen Ausführungsbeispielen werden also keine besonderen Anforderungen an die Eigensteifigkeit der Startelektrode 1 gestellt.

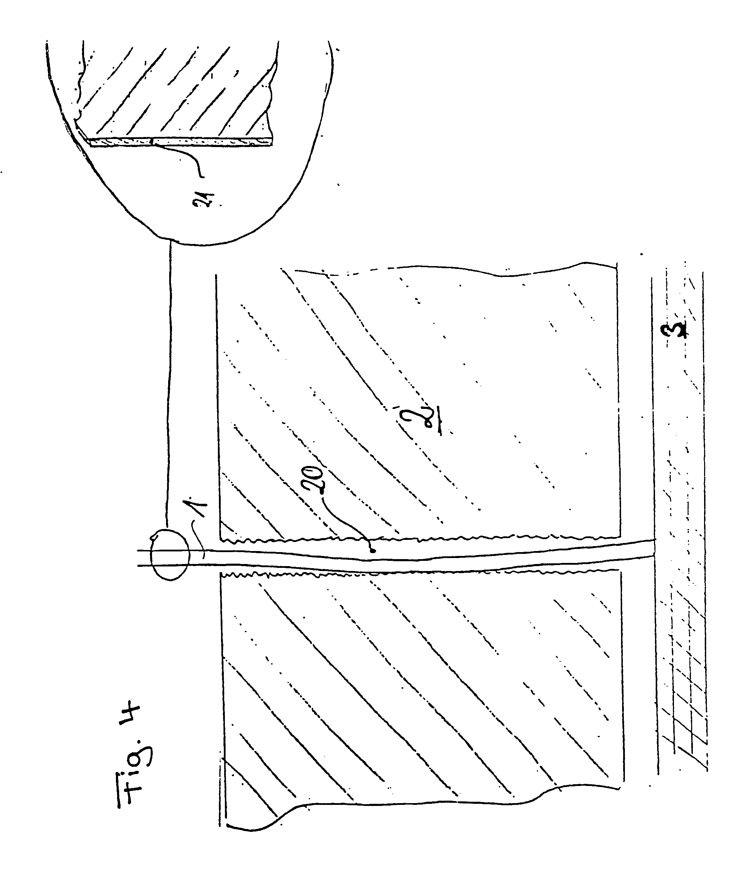

Bei den übrigen Ausführungsbeispielen sollte die Eigensteifigkeit der Startelektrode 1 so gewählt sein, dass sie sich in der Zeit zwischen ihrem Auftreffen auf den Anschlag 3 und ihrem Rückzug aus dem Startloch nicht gegen die Innenwandung des Startlochs biegt. Gemäss dem in Figur 4 dargestellten Ausführungsbeispiel ist die Startelektrode 1 sicherheitshalber aussen von einem Isolatorlack 21 überzogen. Der Isolatorlack 21 verhindert einen Kurzschluss für den Fall, dass sich die Startelektrode 1 trotz ihrer Eigensteifigkeit gegen die Innenwandung des Bohrlochs 20 stösst.

Nach einem weiteren Ausführungsbeispiel weist der Anschlag 3 mindestens in den Bereich, der dem zu erwartenden Startelektrodenaustritt aus dem Bohrloch 20 gegenüber liegt, einen blanken elektrischen Leiter auf. Dieser Leiter liegt auf einem anderen elektrischen Potential als die Startelektrode 1. Sobald die Startelektrode 1 den Anschlag 3 im Bereich seines Leiters kontaktiert, beginnt ein Strom zu fliessen. Dieser Stromfluss ist beispielsweise über ein übliches Ampermeter messbar. Aus dem Stromsignal ist wiederum ein Signal zum Herausziehen der Startelektrode 1 aus dem Bohrloch 20 ableitbar.

**Patentansprüche**

1. Verfahren zur Ermittlung der Fertigstellung eines durch ein Werkstück geführten Startlochs, das mit Hilfe einer von einer Antriebseinrichtung (4, 5, 6) vorschiebbaren Startelektrode (1) funkenerosiv auf einer Elektroerosionsmaschine gebohrt wird, bei welchem die Startelektrodenspitze ein in Bohrrichtung hinter dem Werkstück (2) angeordnetes Kontaktierungsteil berührt,
   dadurch gekennzeichnet, daß
   eine sich aufgrund der Berührung zwischen der Startelektrodenspitze und dem Kontaktierungsteil ergebende sprunghafte Änderung eines der Startelektroden-Vorschubeinrichtung oder der Startelektroden-Vorschubbewegung zuordenbaren Parameters selbsttätig ermittelt wird.

2. Verfahren nach Anspruch 1, bei welchem das Kontaktierungsteil als Anschlag (3) für die Startelektrodenspitze ausgebildet ist, dadurch gekennzeichnet, daß der Stillstand der Startelektrode (1) oder eines Teiles der Antriebseinrichtung (4, 5, 6) ermittelt wird.

3. Verfahren nach Anspruch 1 oder 2, bei welchem das Kontaktierungsteil als Anschlag (3) für die Startelektrodenspitze ausgebildet ist und die Antriebseinrichtung (4, 5, 6) für den Startelektrodenvorschub einen elektrischen Antriebsmotor (5) aufweist, dadurch gekennzeichnet, daß der Anstieg der elektrischen Leistungsaufnahme des Antriebsmotors (5) über einen vorgegebenen Wert ermittelt wird.

4. Verfahren nach einem der Ansprüche 1 bis 3, bei welchem das Kontaktierungsteil im Bereich des Auftreffpunktes der Startelektrodenspitze einen blanken elektrischen Leiter aufweist, der auf einem anderen elektrischen Potential als die Startelektrode (1) steht, dadurch gekennzeichnet, daß der Beginn des Stromflusses im elektrischen Leiter ermittelt wird.

5. Vorrichtung zur Ermittlung der Fertigstellung eines durch ein Werkstück geführten Startlochs, das mit Hilfe einer von einer Antriebseinrichtung (4, 5, 6) vorschiebbaren Startelektrode (1) funkenerosiv auf einer Elektroerosionsmaschine gebohrt wird, mit einem in Bohrrichtung dicht hinter dem Werkstück (2) angeordneten Kontaktierungsteil, das nach Fertigstellung des Startlochs von der Startelektrodenspitze berührt wird,
   gekennzeichnet durch einen Fühler (7; 16) mit nachgeschalteter Einrichtung (z. B. Diskriminatorstufe) zur selbsttätigen Erfassung einer sprunghaften Änderung eines der Startelektroden-Vorschubeinrichtung oder der Startelektroden-Vorschubbewegung zugeordneten Verfahrensparameters.

8. Vorrichtung nach Anspruch 5 mit einem motorisch angetriebenen Spindelantrieb (4, 5) für den Startelektrodenvorschub, dadurch gekennzeichnet, daß das Kontaktierungsteil als Anschlag (3) für die Startelektrodenspitze ausgebildet und der Antriebsmotor (5) über eine Rutschkupplung (6) mit der Antriebsspindel (4) verbunden und der Fühler (7) als Bewegungsfühler zur Ermittlung der Vorschubbewegung der Startelektrode (1) oder der Spindelumdrehung ausgelegt ist.

7. Vorrichtung nach Anspruch 5 oder 6 mit einem elektrisch angetriebenen Startelektrodenvorschub, dadurch gekennzeichnet, daß der Fühler (16) ein mit dem Eingang des elektrischen Antriebsmotors (5) verbundener Leistungsfühler zur Ermittlung der vom Antriebsmotor (5) aufgenommenen Leistung ist.

8. Vorrichtung nach einem der Ansprüche 5 bis 7, dadurch gekennzeichnet, daß das Kontaktierungsteil wenigstens im Bereich des zu erwartenden Auftreffpunktes der Startelektrodenspitze einen blanken elektrischen Leiter aufweist, der auf einem anderen elektrischen Potential als die Startelektrode (1) liegt und in Reihe mit einem Strommeßgerät geschaltet ist.

9. Vorrichtung nach einem der Ansprüche 5 bis 8 mit einer über einen EIN/AUS-Schalter betätigbaren Startelektroden-Vorschubeinrichtung, dadurch gekennzeichnet, daß das Kontaktierungsteil einen als Zweipunktschalter (11, 12) ausgelegten und derart angeordneten Fühler aufweist, daß er nach Austritt der Startelektrodenspitze aus dem Bohrloch von der Startelektrodenspitze selbst oder einem mit ihr verbundenen Teil (8) betätigbar ist.

## Claims

1. Method for detecting the completion of a starting hole directed through a workpiece, which starting hole is bored by spark erosion on an electroerosion machine by means of a starting electrode (1) which can be advanced by a driving device (4, 5, 6), by which method the starting electrode tip touches a contacting part arranged after the workpiece (2) in the direction of boring, characterised in that there is automatically detected a sudden variation in a parameter, which can be associated with the starting electrode advancing device or with the starting electrode advancing movement, resulting on account of the contact between the starting electrode tip and the contacting part.

2. Method according to claim 1, by which method the contacting part is formed as a stop (3) for the starting electrode tip, characterised in that the stoppage of the starting electrode (1) or of a part of the driving device (4, 5, 6) is detected.

3. Method according to claim 1 or 2, by which method the contacting part is formed as a stop (3) for the starting electrode tip and the driving device (4, 5, 6) for the starting electrode advance has an electric driving motor (5), characterised in that the rise in the electrical power consumption of the driving motor (5) is detected by way of a preset value.

4. Method according to one of the claims 1 to 3, by which method the contacting part has, in the region of the point of impact of the starting electrode tip, a bare electric conductor which is at a different electric potential from the starting electrode (I), characterised in that the start of the current flow in the electric conductor is detected.

5. Device for detecting the completion of a starting hole directed through a workpiece, which starting hole is bored by spark erosion on an electroerosion machine by means of a starting electrode (1) which can be advanced by a driving device (4, 5, 6), having a contacting part which is arranged closely after the workpiece (2) in the direction of boring and Is contacted, after completion of the starting hole, by the starting electrode tip, characterised by a sensor (7: 16) with subsequently connected arrangement (e. g. discriminator stage) for the automatic detection of a sudden variation in a process parameter associated with the starting electrode advancing device or the starting electrode advancing movement.

6. Device according to claim 5 having a motordriven spindle drive (4, 5) for the starting electrode advance, characterised in that the contacting part is formed as a stop (3) for the starting electrode tip and the driving motor (5) is connected by way of a slip clutch (6) with the driving spindle (4), and the sensor (7) is designed as a movement sensor for detecting the advancing movement of the starting electrode (1) or the spindle rotation.

7. Device according to claim 5 or 6 having an electrically driven starting electrode advance, characterised in that the sensor (16) is a power sensor connected to the input of the electric driving motor (5) for the detection of the power consumed by the driving motor (5).

8. Device according to one of the claims 5 to 7, characterised in that the contacting part has, at least in the region of the prospective point of impact of the starting electrode tip, a bare electric conductor which is at a different electric potential from the starting electrode (1) and is connected in series with a current measuring instrument.

9. Device according to one of the claims 5 to 8 having a starting electrode advancing device which can be actuated by an ON/OFF switch, characterised in that the contacting part has a sensor which is designed as a two-state switch (11, 12) and is arranged such that it can be actuated, after the starting electrode tip has emerged from the bore hole, by the starting electrode tip itself or by a part (8) connected therewith.

## Revendications

1. Procédé pour déterminer l'achèvement d'un trou d'ébauche réalisé à travers une pièce à usiner, qui est percé, par électro-érosion, sur une machine à électro-érosion au moyen d'une électrode d'ébauche (1) qu'un mécanisme d'entrainement (4, 5, 6) peut faire coulisser et selon lequel la pointe de l'électrode d'ébauche vient au contact d'une pièce de mise en contact disposée derrière la pièce à usiner (2), dans le sens du perçage,
caractérisé en ce que l'on détermine automatiquement une modification brusque, survenant par suite du contact entre la pointe d'électrode d'ébauche et la pièce de mise en contact, d'un paramètre que l'on peut rattacher au mécanisme d'avancement de l'électrode d'ébauche ou au mouvement d'avancement de l'électrode d'ébauche.

2. Procédé selon la revendication 1, dans lequel la pièce de mise en contact est conçue sous forme de butée (3) pour la pointe de l'électrode d'ébauche, caractérisé en ce que l'on détermine l'arrêt de l'électrode d'ébauche (1) ou d'une partie du mécanisme d'entrainement (4, 5, 6).

3. Procédé selon la revendication 1 ou 2, dans lequel la pièce de mise en contact est conçue sous forme de butée (3) pour la pointe de l'électrode d'ébauche et dans lequel le mécanisme d'entrainement (4, 5, 6) pour l'avance de l'électrode d'ébauche présente un moteur électrique d'entrainement (5), caractérisé en ce que l'on détermine l'accroissement de la consommation électrique du moteur d'entrainement (5) au-delà d'une valeur prescrite.

4. Procédé selon l'une des revendications 1 à 3, dans lequel la pièce de mise en contact présente, dans la zone du point d'arrivée de la pointe de l'électrode d'ébauche, un conducteur électrique dénudé qui se trouve à un potentiel électrique différent de celui de l'électrode d'ébauche (1), caractérisé en ce que l'on détermine le début du passage du courant dans le conducteur électrique.

5. Dispositif pour déterminer l'achèvement d'un trou d'ébauche réalisé à travers une pièce à usiner, qui est percé, par électro-érosion, sur une machine à électro-érosion au moyen d'une électrode d'ébauche (1) qu'un mécanisme d'entrainement (4, 5, 6) peut faire coulisser, avec une pièce de mise en contact qui est disposée juste derrière la pièce à usiner (2), dans le sens du perçage, et au contact de laquelle vient la pointe de l'électrode d'ébauche après achèvement du trou d'ébauche,
caractérisé par un détecteur (7; 16), avec dispositif (par exemple étage discriminateur) monté en aval, pour la saisie automatique d'une modification brusque d'un paramètre rattaché au mécanisme d'avancement de l'électrode d'ébauche ou au mouvement d'avancement de l'électrode d'ébauche.

6. Dispositif selon la revendication 5, avec un entrainement motorisé d'arbre porte-outil (4, 5) pour l'avancement de l'électrode d'ébauche, caractérisé en ce que la pièce de mise en contact est conçue sous forme de butée (3) pour la pointe de l'électrode d'ébauche et en ce que le moteur d'entrainement (5) est relié à l'arbre porte-outil d'entrainement (4) par l'intermédiaire d'un accouplement à glissement (6); et en ce que le détecteur (7) est conçu sous forme de détecteur de mouvement pour déterminer le mouvement d'avancement de l'électrode d'ébauche (1) ou le mouvement de rotation de l'arbre porte-outil.

7. Dispositif selon la revendication 5 ou 6, avec un avancement de l'électrode d'ébauche par entrainement électrique, caractérisé en ce que le détecteur (16) est un détecteur de puissance, relié à l'entrée du moteur électrique d'entrainement (5), pour déterminer la puissance consommée par le moteur d'entrainement (5).

8. Dispositif selon l'une des revendications 5 à 7, caractérisé en ce que la pièce de mise en contact présente au moins dans la zone du point d'arrivée attendu de la pointe de l'électrode d'ébauche, un conducteur électrique dénudé qui se trouve à un potentiel électrique différent de celui de l'électrode d'ébauche (1) et qui est monté en série avec un appareil de mesure du courant.

9. Dispositif selon l'une des revendications 5 à 8, avec un mécanisme d'avancement de l'électrode d'ébauche qui peut être commandé par l'intermédiaire de l'interrupteur marche/arrêt, caractérisé en ce que la pièce de mise en contact présente un détecteur conçu sous forme d'interrupteur à deux points (11, 12) et disposé de façon qu'après que la pointe de l'électrode d'ébauche soit sortie hors du trou, il puisse être activé par la pointe de l'électrode d'ébauche elle-même ou par une pièce (8) qui lui est reliée.

Fig. 1

Fig. 2

Fig. 3

Fig. 5

Fig. 4